# EUROPÄISCHE PATENTANMELDUNG

(11) **EP 1 971 021 A2**
(43) Veröffentlichungstag der Anmeldung: **17.09.2008**
(21) Anmeldenummer: 08151120.6
(22) Anmeldetag: 06.02.2008
(51) Int. Cl.: H02M 7/06

(54) **Schaltungsanordnung zur Ansteuerung eines Schaltnetzteils**

(30) Priorität: 14.02.2007 DE 102007007249
(71) Anmelder: BLOCK Transformatoren-Elektronik GmbH & Co. KG, 27283 Verden (DE)
(72) Erfinder: Leipscher, Peter, 28816 Stuhr (DE)
(74) Vertreter: Eisenführ, Speiser & Partner

(57) **Zusammenfassung**

Die Erfindung betrifft eine Schaltungsanordnung zur Ansteuerung eines Schaltnetzteils, um eine kurzzeitige Erhöhung der Leistungsübertragung des Schaltnetzteils zu bewirken, wobei das Schaltnetzteil einen Transformator zur Übertragung elektrischer Leistung von einer Primärseite auf eine Sekundärseite, eine Schalteinheit zum Schalten eines Ansteuerstroms zur Ansteuerung des Transformators entsprechend einer Schaltfrequenz und eine Steuereinheit zur Steuerung der Schaltfrequenz aufweist, wobei die Schaltungsanordnung aufweist:
- eine Lastmesseinheit zur Messung einer zu einem durch eine Last auf der Sekundärseite fließenden Laststrom proportionalen Lastmessgröße,
- einer Schwellwerteinheit zur Prüfung, ob die gemessene Lastmessgröße einen ersten Schwellwert überschreitet,
- einer Steuersignalerzeugungseinheit zur Erzeugung, wenn die gemessene Lastmessgröße den ersten Schwellwert überschreitet, eines Frequenzsteuersignals zum Bewirken einer kurzzeitigen Erhöhung der Schaltfrequenz des Ansteuerstroms und zur Erzeugung, wenn die gemessene Lastmessgröße den ersten Schwellwert überschreitet, eines ersten Strombegrenzungssignals zum Bewirken einer Begrenzung des Laststroms auf einen maximalen Dauerlaststrom und zur Ausgabe des Frequenzsteuersignals und des ersten Strombegrenzungssignals an die Steuereinheit.

## Beschreibung

Die vorliegende Erfindung betrifft eine Schaltungsanordnung zur Ansteuerung eines Schaltnetzteils, um eine kurzzeitige Erhöhung der Leistungsübertragung des Schaltnetzteils zu bewirken, wobei das Schaltnetzteil einen Transformator zur Übertragung elektrischer Leistung von einer Primärseite auf eine Sekundärseite, eine Schalteinheit zum Schalten eines Ansteuerstroms zur Ansteuerung des Transformators entsprechend einer Schaltfrequenz und eine Steuereinheit zur Steuerung der Schaltfrequenz aufweist. Die Erfindung betrifft ferner eine Schaltnetzteilvorrichtung mit einem Schaltnetzteil und einer solchen Schaltungsanordnung zur Ansteuerung des Schaltnetzteils sowie ein entsprechendes Verfahren zur Ansteuerung eines Schaltnetzteils.

Schaltnetzteile (oft auch als Schaltnetzgeräte bezeichnet) sind allgemein bekannt und dienen dazu, eine elektrische Spannung zu wandeln, beispielsweise aus einer Netzspannung (Wechselspannung) eine Gleichspannung zu erzeugen. Zur Übertragung einer vorgegebenen elektrischen Leistung in einem Schaltnetzteil wird zur Potentialtrennung und Spannungswandlung ein Transformator (oft als Wandlertransformator bezeichnet) eingesetzt. Die übertragbare Leistung ist vom Kernquerschnitt des Transformators und der gewählten Frequenz (der sogenannten Schaltfrequenz) des Primärstromes, also des durch die Primärwicklung des Transformators fließenden Ansteuerstroms, abhängig. Durch Erhöhung der Schaltfrequenz kann zwar eine größere Leistung übertragen werden, gleichzeitig steigen aber die Verluste im Transformator und in den zum Schalten des Ansteuerstroms meist verwendeten Schalttransistoren der Schalteinheit an. Der Wirkungsgrad des Schaltnetzteils sinkt damit insgesamt. Andererseits kann der Transformator auch, um eine höhere Leistung übertragen zu können, größer dimensioniert werden, wodurch allerdings der Platzbedarf und die Kosten steigen. In der Regel wird der Transformator deshalb so dimensioniert, dass er die Nennleistung mit einer ausreichenden Reserve übertragen kann.

Der vorliegenden Erfindung liegt die Aufgabe zugrunde, eine Schaltungsanordnung zur Ansteuerung eines Schaltnetzteils zu schaffen, mit dem es ermöglicht wird, mit einem gegebenen Schaltnetzteil, also insbesondere einem für den einfachen Nennstrom dimensionierten Transformator, kurzzeitig eine höhere Leistung auf der Sekundärseite des Transformators bereitstellen zu können. Ferner sollen ein entsprechendes Verfahren zur Ansteuerung eines Schaltnetzteils und eine entsprechende Schaltnetzteilvorrichtung angegeben werden.

Die Aufgabe wird erfindungsgemäß gelöst durch eine Schaltungsanordnung nach Anspruch 1, die folgendes aufweist:
- eine Lastmesseinheit zur Messung einer zu einem durch eine Last auf der Sekundärseite fließenden Laststrom proportionalen Lastmessgröße,
- einer Schwellwerteinheit zur Prüfung, ob die gemessene Lastmessgröße einen ersten Schwellwert überschreitet,
- einer Steuersignalerzeugungseinheit zur Erzeugung, wenn die gemessene Lastmessgröße den ersten Schwellwert überschreitet, eines Frequenzsteuersignals zum Bewirken einer kurzzeitigen Erhöhung der Schaltfrequenz des Ansteuerstroms und zur Erzeugung, wenn die gemessene Lastmessgröße den ersten Schwellwert überschreitet, eines ersten Strombegrenzungssignals zum Bewirken einer Begrenzung des Laststroms auf einen maximalen Dauerlaststrom und zur Ausgabe des Frequenzsteuersignals und des ersten Strombegrenzungssignals an die Steuereinheit.

Ein entsprechendes Verfahren ist in Anspruch 14 angegeben. Eine Schaltnetzteilvorrichtung mit einem Schaltnetzteil und einer solchen Schaltungsanordnung ist in Anspruch 13 angegeben. Vorteilhafte Ausgestaltungen der Schaltungsanordnung sind in den Unteransprüchen angegeben. Es versteht sich, dass das erfindungsgemäße Verfahren und die Schaltnetzteilvorrichtung in identischer oder entsprechender Weise vorteilhaft weitergebildet sein können.

Der vorliegenden Erfindung liegt der Gedanke zugrunde, eine höhere Leistungsabgabe auf der Sekundärseite des Transformators dadurch zu erreichen, dass während des erhöhten Leistungsbedarfs (insbesondere des erhöhten Strombedarfs) auf der Sekundärseite die Schaltfrequenz des Ansteuerstroms für diese kurze Zeit erhöht wird. Erfindungsgemäß wird also in Kauf genommen, dass kurzzeitig während des erhöhten Leistungsbedarfs aufgrund der höheren Schaltfrequenz der Wirkungsgrad des Schaltnetzteils absinkt gegenüber dem ansonsten hohen Wirkungsgrad im Normalbetrieb, in dem der für den Nennstrom dimensionierte Transformator bei einer Nenn-Schaltfrequenz angesteuert wird. Dies hat jedoch den Vorteil, dass bei gleicher Baugröße des Transformators mindestens die doppelte Leistung kurzzeitig übertragbar ist. Gegebenenfalls sind die Bauelemente, insbesondere die in der Schalteinheit üblicherweise eingesetzten Halbleiterbauelemente, wie insbesondere Transistoren, in ihrer Dimensionierung entsprechend anzupassen. Die Kosten und der Raumbedarf dafür sind allerdings wesentlich geringer als beim Einsatz eines größer dimensionierten Transformators. Auch die Erhöhung der Temperatur anderer Bauteile des Schaltnetzteils erfolgt nur während einer kurzen festgelegten Zeit der erhöhten Leistungsabgabe und ist somit nicht weiter nachteilig.

Um die erfindungsgemäße kurzzeitige Leistungserhöhung auf der Sekundärseite zu erreichen, wird erfindungsgemäß zunächst eine Lastmessgröße gemessen, die proportional ist zu dem Laststrom, der durch die Last auf der Sekundärseite fließt, die die erhöhte Leistung benötigt. Diese Lastmessgröße kann beispielsweise eine Lastmessspannung sein oder auch der Laststrom selbst. Anschlie-ßend wird geprüft, ob diese Lastmessgröße oberhalb eines ersten Schwellwerts liegt, was einen erhöhten Leistungsbedarf der Last signalisiert. Falls dies der Fall ist, wird ein Frequenzsteuersignal erzeugt, das der Steuereinheit des Schaltnetzteils zugeführt wird, die dann die Schalteinheit so steuert, dass diese die Schaltfrequenz des Ansteuerstroms erhöht. Ferner wird in diesem Fall ein erstes Strombegrenzungssignal erzeugt und an die Steuereinheit ausgegeben, um eine Begrenzung des Laststroms auf einen maximalen Dauerlaststrom zu bewirken, indem die Steuereinheit die Schalteinheit so schaltet, dass die Schaltfrequenz eine maximale Dauerschaltfrequenz nicht überschreitet. Dadurch wird verhindert, dass für längere Zeit oder dauerhaft die höhere Leistung übertragen wird, was zu einer Schädigung des Schaltnetzteils führen könnte.

Durch die Erfindung lässt sich der Einsatz einer oder mehrerer selektiver Absicherungen einzelner sekundärer Stromkreise erreichen. Der erhöhte Strombedarf für das Auslösen einer elektronischen Sicherung wird bereitgestellt, ohne dass die Versorgungsspannungen anderer Stromkreise zusammenbrechen. Die kurzzeitige Leistungserhöhung kann auch den erhöhten Strombedarf beim Zuschalten von Motoren oder großen Kondensatoren bereitstellen.

In einer bevorzugten Ausgestaltung ist vorgesehen, dass die Steuersignalerzeugungseinheit eine Verzögerungseinheit zur Zeitverzögerung der Ausgabe des ersten Strombegrenzungssignals an die Steuereinheit aufweist. Dadurch wird auf einfache Weise bewirkt, dass die Strombegrenzung erst nach kurzer Zeit, vorteilhaft zwischen 1 und 20 Sekunden, beispielsweise nach etwa 5 bis 10 Sekunden, eingreift. Für diese Zeitdauer, die je nach Dimensionierung entsprechender Bauelemente fest eingestellt oder gegebenenfalls auch für den Benutzer variabel einstellbar ist, kann also mit dem Schaltnetzteil eine erhöhte Leistung übertragen werden. Erst danach erfolgt die Begrenzung des Laststromes auf den maximalen Dauerlaststrom, um eine Schädigung von Komponenten zu verhindern.

Bevorzugt ist vorgesehen, dass die Verzögerungszeit abhängig vom Laststrom ist und umso kleiner ist, je größer die kurzzeitig erhöhte Leistung ist.

Bevorzugt weist die Verzögerungseinheit eine Kapazität auf, die, wenn die gemessene Lastmessgröße den ersten Schwellwert überschreitet, entladen wird, wobei deren Entladezeit die Verzögerungszeit bestimmt und deren Entladestrom die Erzeugung des Frequenzsteuersignals bewirkt. Weiter bevorzugt ist die Verzögerungseinheit so ausgestaltet, dass die Kapazität wieder aufgeladen wird, wenn die gemessene Lastmessgröße den ersten Schwellwert wieder unterschreitet. Dies stellt eine einfache und kostengünstige Ausgestaltung der Verzögerungseinheit dar.

Bevorzugt wird als Lastmessgröße eine zum Laststrom direkt proportionale Messspannung gemessen, wozu bevorzugt ein Messwiderstand eingesetzt wird. Grundsätzlich können jedoch auch andere Größen als Lastmessgrößen verwendet werden, wie beispielsweise der Laststrom selbst. Es könnte auch der Strom gemessen werden, der durch die Schalteinheit, insbesondere die primärseitigen Schalttransistoren, fließt. Damit wird jedoch eine Leistungsbegrenzung des Schaltnetzteiles erreicht und keine exakte Begrenzung des Laststromes.

Der erste Schwellwert ist bevorzugt so gewählt, dass mittels der Schwellwerteinheit geprüft wird, ob der Laststrom dem m-fachen des Nennstroms des Transformators beträgt, wobei m im Bereich zwischen 1,0 und 2,2, vorzugsweise im Bereich zwischen 1,2 und 1,5, liegt. Ab dieser Schwelle wird also erfindungsgemäß eine höhere Leistung kurzzeitig übertragen. Bevorzugt liegt auch der maximale Dauerlaststrom, auf den der Laststrom erfindungsgemäß nach dieser kurzzeitigen Leistungsübertragung begrenzt wird, in diesem Bereich, insbesondere am unteren Ende dieses Bereichs (beispielsweise beim 1,2-fachen des Nennstroms). Die Einstellung der Schwelle erfolgt bevorzugt durch entsprechende Dimensionierung von Bauelementen der Schwellwerteinheit, ist gegebenenfalls aber auch durch Wahl entsprechender Komponenten für den Benutzer variabel gestaltbar.

In einer weiteren bevorzugten Ausgestaltung ist erfindungsgemäß eine Überstromschutzeinheit vorgesehen zur Prüfung, ob die gemessene Lastmessgröße einen zweiten Schwellwert überschreitet und, wenn die gemessene Lastmessgröße den zweiten Schwellwert überschreitet, zur Erzeugung und Ausgabe eines zweiten Strombegrenzungssignals zur Begrenzung des Laststroms auf einen Überlaststrom, der größer als der maximale Dauerlaststrom ist. Durch diese Überstromschutzeinheit (oft auch als Over Current Protection (OCP) bezeichnet), die bevorzugt sofort bei Überschreiten des zweiten Schwellwerts eingreift, wird verhindert, dass der Laststrom und damit die übertragbare Leistung eine bestimmte Obergrenze überschreitet, die sofort zu Schädigung von Bauteilen führen könnte. Dadurch wird auch ein Kurzschlussschutz gewährleistet. Bevorzugt ist der zweite Schwellwert dabei so gewählt, dass mittels der Überstromschutzeinheit geprüft wird, ob der Laststrom dem n-fachen des Nennstroms des Transformators entspricht, wobei n im Bereich zwischen 2,0 und 3,0, vorzugsweise im Bereich zwischen 2,0 und 2,3, liegt.

Vorteilhaft ist in einer Weiterbildung jedoch vorgesehen, dass die Überstromschutzeinheit zur kurzzeitigen Anhebung des zweiten Schwellwertes ausgestaltet ist, so dass die Überstromschutzeinheit prüft, ob der Laststrom dem p-fachen des Nennstroms des Transformators entspricht, wobei p im Bereich zwischen 2,0 und 4,0, vorzugsweise im Bereich zwischen 2,5 und 3,5, liegt, und nur in diesem Fall das zweite Strombegrenzungssignal erzeugt und ausgibt. Dadurch kann für bestimmten Anwendungen vorgesehen werden, dass der Laststrom für kurze Zeit sogar den Überlaststrom übersteigt und somit für diese Kurzzeit eine noch größere Leistung übertragen wird. Beispielsweise sind bei bestimmten Anwendungen auf der Lastseite mechanische Sicherungsautomaten zur Absicherung einzelner Stromkreise eingesetzt, die für einige Millisekunden einen mehrfachen Strom des Nennwertes der Sicherung zum Auslösen benötigen. Dieser Strom kann von einem erfindungemäß angesteuerten Schaltnetzteil bzw. einer erfindungsgemäßen Schaltnetzteilvorrichtung geliefert werden, ohne dass die Ausgangsspannung zusammenbricht. Teure elektronische Sicherungen, deren Kosten häufig um das zehnfache höher sind als die Kosten eines Sicherungsautomaten selbst, auf der Lastseite, können damit ersetzt werden. Die Zeit, für die eine solche kurzzeitige Anhebung des zweiten Schwellwertes ermöglicht wird, ist wiederum über geeignete Wahl von Bauelementen fest oder auch variabel einstellbar, wobei diese Zeit unabhängig von der Verzögerungszeit der Verzögerungseinheit, insbesondere deutlich kürzer, gewählt werden kann. Bevorzugt wird eine solche Erhöhung des Nennstroms über den Überlaststrom hinaus nur für weniger als 1 Sekunde zugelassen, beispielsweise für 0,2 Sekunden.

In einer weiteren bevorzugten Ausgestaltung ist erfindungsgemäß vorgesehen, dass die Ausgabe des Frequenzsteuersignals und eines Überspannungssignals zur Anzeige einer fehlerhaften oder ausgefallenen Spannungsregelung an die Steuereinheit mittels eines gemeinsamen Optokopplers erfolgt. Der Optokoppler dient damit sowohl zur galvanischen Trennung der Primär- und Sekundärseite als auch für die Übertragung dieser Signale, was durch eine geeignete Ausgestaltung der erfindungsgemäßen Schaltungsanordnung erreicht wird. Dadurch wird eine weitere deutliche Einsparung an Kosten und Raumbedarf erzielt.

Die Erfindung wird nachfolgend anhand der Zeichnungen näher erläutert. Es zeigen:
- Fig. 1: ein Blockschaltbild einer ersten Ausgestaltung einer erfindungsgemäßen Schaltnetzteilvorrichtung,
- Fig. 2: ein Blockschaltbild einer erfindungsgemäßen Steuersignalerzeugungseinheit,
- Fig. 3: ein Blockschaltbild einer zweiten Ausgestaltung einer erfindungsgemäßen Schaltnetzteilvorrichtung,
- Fig. 4: ein Blockschaltbild einer dritten Ausgestaltung einer erfindungsgemäßen Schaltnetzteilvorrichtung,
- Fig. 5: ein Blockschaltbild einer vierten Ausgestaltung einer erfindungsgemäßen Schaltnetzteilvorrichtung,
- Fig. 6: ein Zeitdiagramm des zeitlichen Verlaufs des Laststroms bei Einsatz der Erfindung und
- Fig. 7: ein beispielhaftes Schaltungsdiagramm der vierten Ausgestaltung der erfindungsgemäßen Schaltnetzteilvorrichtung.

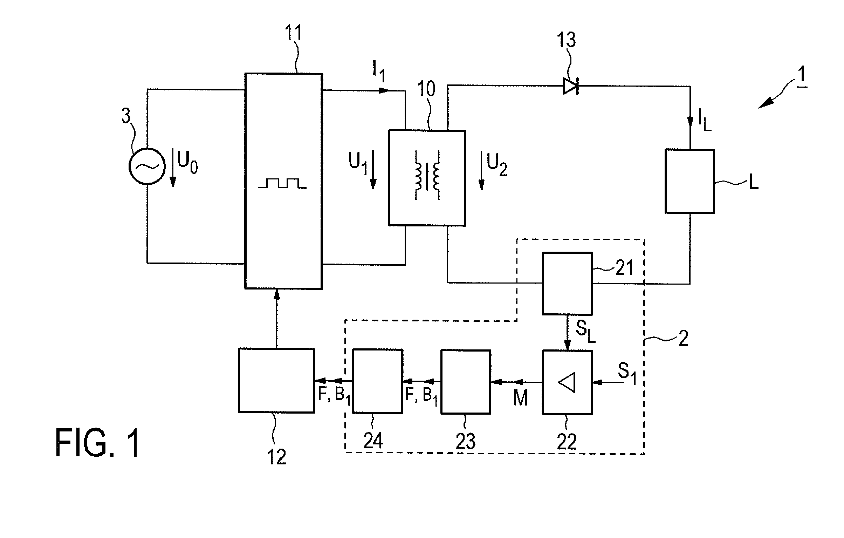

Fig. 1 zeigt ein Blockschaltbild einer ersten Ausgestaltung einer erfindungsgemäßen Schaltnetzteilvorrichtung mit einem Schaltnetzteil 1 und einer erfindungsgemäßen Schaltungsanordnung 2 zur Ansteuerung des Schaltnetzteils 1. Das Schaltnetzteil 1 umfasst einen Wandlertransformator 10, der eine auf der Primärseite bereitgestellte Eingangsspannung U₁ in eine auf der Sekundärseite ausgegebene Ausgangsspannung U₂ wandelt. Das Schaltnetzteil 1 umfasst ferner, auf der Primärseite des Transformators 10, eine Schalteinheit 11, die von einer Steuereinheit 12 des Schaltnetzteils 1 angesteuert wird und aus einer von einer Spannungsquelle 3 bereitgestellten Versorgungsspannung U₀ (beispielsweise eine Netzspannung des elektrischen Versorgungsnetzes) die Eingangsspannung U₁ des Transformators 10 erzeugt. Dazu wird die Versorgungsspannung U₀ entsprechend einer Schaltfrequenz an- und ausgeschaltet, wobei bevorzugt die Versorgungsspannung U₀ zunächst gleichgerichtet und geglättet wird, sodass ein geschalteter Ansteuerstrom I₁ bzw. eine geschaltete Ansteuerspannung U₁ am Ausgang der Schalteinheit 11 erzeugt wird. Ein solches Schaltnetzteil 1 wird häufig auch als primär-getaktetes Schaltnetzteil bezeichnet.

Auf der Sekundärseite des Transformators 10 umfasst das Schaltnetzteil 1 bevorzugt Gleichrichtungsmittel 13 zur Gleichrichtung der Ausgangsspannung U₂, so dass an der Last L ein gleichgerichteter Laststrom I_{L} bereitgestellt wird. Der grundsätzliche Aufbau und die Wirkungsweise eines solchen Schaltnetzteils sind allgemein bekannt und sollen deshalb an dieser Stelle nicht weiter erläutert werden.

Die erfindungsgemäße Schaltungsanordnung 2 zur Ansteuerung des Schaltnetzteils 1 umfasst zunächst eine Lastmesseinheit 21, mit der eine zu dem Laststrom I_{L} proportionale Lastmessgröße S_{L} gemessen wird. Im einfachsten Fall kann diese Lastmesseinheit 21 ein einfacher Lastmesswiderstand sein, der eine zu dem Laststrom I_{L} direkt proportionale Lastmessspannung im Sekundärstromkreis als Lastmessgröße S_{L} misst.

Diese Lastmessgröße S_{L} wird als eine Eingangsgröße einer Schwellwerteinheit 22 zugeführt, die als weitere Eingangsgröße einen ersten Schwellwert S₁ erhält. Für den Fall, dass die Lastmessgröße S_{L} eine Lastmessspannung ist, ist der erste Schwellwert S₁ ein Spannungsschwellwert. In dieser Schwellwerteinheit 22 wird geprüft, ob die gemessene Lastmessgröße S_{L} den ersten Schwellwert S₁ überschreitet. Wenn dies der Fall ist, wird dies entsprechend einer nachgeschalteten Steuersignalerzeugungseinheit 23 gemeldet, beispielsweise über ein entsprechendes Meldesignal M oder indem ein entsprechender Pegel auf der Verbindungsleitung zwischen der Schwellwerteinheit 22 und der Steuersignalerzeugungseinheit 23 signifikant verändert wird, beispielsweise hochgesetzt wird.

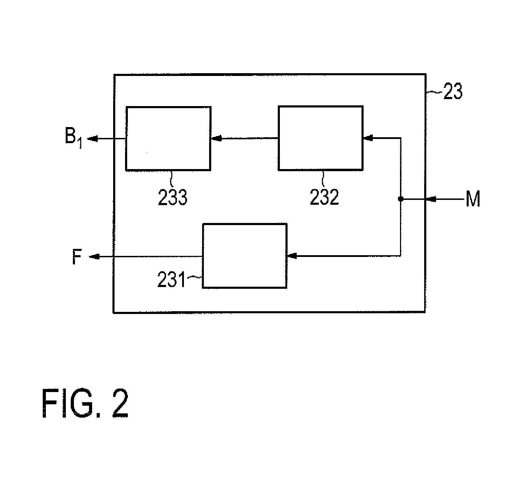

Die Steuersignalerzeugungseinheit 23, die nachfolgend noch anhand der Fig. 2 näher erläutert werden wird, erzeugt dann ein Frequenzsteuersignal F, welches über eine Potentialtrennungseinheit 24, beispielsweise einen Optokoppler, der Steuereinheit 12 zugeführt wird. Dieses Frequenzsteuersignal F veranlasst die Steuereinheit 12, die Schalteinheit 11 so zu steuern, dass die Ansteuerfrequenz erhöht wird, was dazu führt, dass über den Transformator 10 eine größere Leistung übertragen und an der Last L bereitgestellt wird.

Wenn die gemessene Lastmessgröße S_{L} den ersten Schwellwert S₁ überschreitet, erzeugt die Steuersignalerzeugungseinheit 23 ferner ein erstes Strombegrenzungssignal B₁, welches ebenfalls über die Potentialtrennungseinheit 24 der Steuereinheit 12 zugeführt wird. Dadurch wird die Steuereinheit 12 veranlasst, die Schalteinheit 11 so anzusteuern, dass eine maximale Daueransteuerfrequenz nicht überschritten wird, um somit den Laststrom auf einen maximalen Dauerlaststrom zu begrenzen und damit auch die über einen längeren Zeitraum übertragene Leistung auf die Sekundärseite zu begrenzen, um einer Schädigung von Bauteilen des Schaltnetzteils bzw. der Last zu verhindern. Wie nachfolgend noch erläutert werden wird, wird dieses erste Strombegrenzungssignal B₁ verzögert ausgegeben, so dass kurzzeitig ein über dem maximalen Dauerlaststrom flie-ßender Laststrom in der Last fließen kann.

Mit der erfindungsgemäßen Schaltnetzteilvorrichtung ist es somit möglich, ohne den Transformator 10 in seiner Dimensionierung zu vergrößern, für kurze Zeit eine deutlich größere Leistung als die Nennleistung des Transformators zu übertragen. Die Kosten und der zusätzliche Raumbedarf für eine eventuell nötige größere Dimensionierung anderer Bauteile der Schaltnetzteilvorrichtung, insbesondere der Schalteinheit 11 (dort werden bevorzugt Thyristoren oder Transistoren bei hohen Schaltfrequenzen bis zu beispielsweise 100 kHz eingesetzt), sind dabei deutlich geringer als beim Einsatz eines größer dimensionierten Transformators 10.

In Fig. 2 ist eine nähere Ausgestaltung der Steuersignalerzeugungseinheit 23 gezeigt. Zur Erzeugung des Frequenzsteuersignals F weist die Steuersignalerzeugungseinheit 23 zunächst eine Frequenzsteuersignalerzeugungseinheit 231 auf. Dieses Signal F kann ein einfacher Steuerbefehl sein, der die Steuereinheit 12 anweist, die Schaltfrequenz zu erhöhen. Ferner weist die Steuersignalerzeugungseinheit eine erste Strombegrenzungssignalerzeugungseinheit 232 auf, die das Strombegrenzungssignal B₁ erzeugt. Dieses Signal wird jedoch nicht sofort an die Steuereinheit 12 ausgegeben, sondern wird mittels einer Verzögerungseinheit 233 erst verzögert ausgegeben, beispielsweise nach einigen Sekunden, um erst danach die Begrenzung des Laststroms (bzw. der übertragenen Leistung) auf den maximalen Dauerlaststrom zu bewirken, davor einen aber einen größeren Laststrom bzw. eine größere übertragene Leistung zuzulassen. Das erste Strombegrenzungssignal B₁ weist dazu die Steuereinheit 12 an, die Schaltfrequenz wieder zu reduzieren bzw. auf eine maximale Dauerschaltfrequenz zu begrenzen, um Schäden an irgendwelchen Bauteilen des Schaltnetzteils zu verhindern.

In einer beispielhaften Ausgestaltung ist die erste Schwellwerteinheit 22 so ausgebildet, dass sie indirekt prüft, ob der Laststrom I_{L} das 1,2-fache des Nennstroms übersteigt. Wenn dies der Fall ist, wird dies mittels des Meldesignals M der Steuersignalerzeugungseinheit 23 angezeigt. Diese erzeugt dann sofort das Frequenzsteuersignal F, das auch unmittelbar an die Steuereinheit 12 weitergegeben wird, die daraufhin die Schalteinheit 11 so ansteuert, dass die Schaltfrequenz hochgeregelt wird. Die Schaltfrequenz kann dabei beispielsweise auf das Doppelte der Schaltfrequenz bei Nennstrom erhöht werden.

Bevorzugt ist jedoch vorgesehen, dass die Schaltfrequenz abhängig von der Stromstärke des Laststroms I_{L} hochgeregelt wird. Dazu ist die erste Schwelleinheit 22 so ausgestaltet, dass das Meldesignal M auch eine Information darüber enthält, um wieviel der aktuelle Laststrom den Nennstrom übersteigt, so dass die Frequenzsteuersignalerzeugungseinheit 231 das Frequenzsteuersignal F entsprechend erzeugt, wozu es also eine Information enthält, um wieviel die Steuereinheit die Schaltfrequenz anheben soll.

Die Verzögerungseinheit 233 ist beispielhaft so ausgestaltet, dass sie das erste Strombegrenzungssignal B₁ erst nach einer Verzögerungszeit von beispielsweise 10 Sekunden ausgibt. Danach wird die Steuereinheit 12 mittels des ersten Strombegrenzungssignals B₁ angewiesen, die Schaltfrequenz wieder auf einen Wert zu verringern, dass ein maximaler Dauerlaststrom, der zu keiner Schädigung von Bauteilen führen kann, nicht überschritten wird. Beispielsweise wird dadurch die Schaltfrequenz auf einen Wert reduziert, bei dem Laststrom I_{L} nur dem 1,2-fachen des Nennstroms entspricht.

Die vorstehend genannten Werte, insbesondere für den ersten Schwellwert, die Verzögerungszeit und den maximalen Dauerlaststrom, sind lediglich beispielhaft zu verstehen. Bevorzugt werden diese Werte durch entsprechende Dimensionierung von Bauelementen bzw. entsprechende Programmierung je nach Anwendungszweck fest vorgegeben. Es ist jedoch auch denkbar, dass diese Werte für den Benutzer individuell variabel sind, beispielsweise mittels eines entsprechenden Controllers umprogrammierbar sind oder durch die Verwendung entsprechender variabler Bauelemente. Bevorzugte Werte für den ersten Schwellwert liegen im Bereich zwischen dem 1,0- und 2,2-fachen des Nennstroms, insbesondere im Bereich zwischen dem 1,2- und 1,5-fachen des Nennstroms. Bevorzugte Werte für die Verzögerungszeit der Verzögerungseinheit liegen im Bereich zwischen 1 und 20 Sekunden, insbesondere im Bereich zwischen 5 und 10 Sekunden. Bevorzugte Werte für den maximalen Dauerlaststrom liegen im Bereich zwischen dem 1,0- und 1,5-fachen des Nennstroms.

In einer Weiterbildung kann auch vorgesehen sein, dass die Verzögerungseinheit so ausgebildet ist, dass sie das erste Strombegrenzungssignal B₁ nicht nach einer fest vorgegebenen Verzögerungszeit ausgibt, sondern dass die Verzögerungszeit abhängig ist von dem Grad der Erhöhung des Laststroms I_{L}. Insbesondere ist die Verzögerungseinheit 233 bevorzugt so ausgebildet, dass die übertragene Leistung multipliziert mit der Zeitdauer der erhöhten Leistungsübertragung in etwa gleich bleibt. Das bedeutet etwa, als Beispiel, dass bei einer Steigerung der übertragenen Leistung um 100% die Verzögerungszeit 5 Sekunden betragen kann, während bei einer Steigerung der übertragenen Leistung um nur 50% die Verzögerungszeit 10 Sekunden betragen kann. Die Verzögerungszeit wird bei dieser Ausgestaltung also abhängig von dem aktuellen Laststrom I_{L} bestimmt und ist nicht fest vorgegeben. Dazu wird auch bei dieser Weiterbildung mit dem Meldesignal M eine Information über den aktuellen Laststrom I_{L} an die Steuersignalerzeugungseinheit 23 übertragen.

Die Steuersignalerzeugungseinheit 23 ist ferner bevorzugt so ausgelegt, dass ein wiederholter erhöhter Laststrom erst nach einer bestimmten Zeit zur Verfügung steht. Damit wird das Schaltnetzteil 1 vor thermischer Überlastung geschützt.

Der für die Übertragung der Signale von der Steuersignalerzeugungseinheit 23 an die Steuereinheit 12 vorgesehene Optokoppler 24 ist häufig bei Schaltnetzteilen für einen von der Spannungsregelung unabhängigen Überspannungsschutz bei Ausfall der Spannungsregelung vorhanden. Vorteilhaft wird deshalb für den erfindungsgemäßen Zweck der Signalübertragung an die Steuereinheit kein gesonderter Optokoppler eingesetzt, sondern es kann der vorhandene Optokoppler für den ursprünglichen Zweck und zusätzlich für die Übertragung der Signale eingesetzt werden.

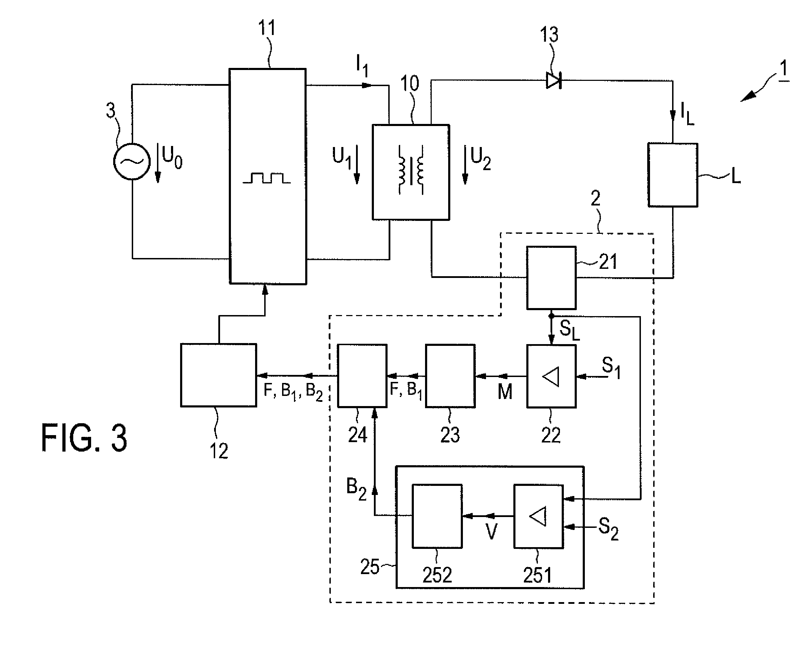

Eine weitere Ausgestaltung einer erfindungsgemäßen Schaltnetzteilvorrichtung ist in Fig. 3 gezeigt. Bei dieser Ausgestaltung weist die Schaltungsanordnung 2 zur Ansteuerung des Schaltnetzteils 1 zusätzlich zu den in Fig. 1 gezeigten Elementen eine Überstromschutzeinheit 25 auf. Diese enthält eine zweite Schwellwerteinheit 251, der ebenfalls die von der Lastmesseinheit 21 gemessene Lastmessgröße S_{L} zugeführt wird und die prüft, ob diese Lastmessgröße einen zweiten Schwellwert S₂ überschreitet. Dadurch wird indirekt (oder direkt, sofern die Lastmessgröße direkt der Laststrom ist) geprüft, ob der Laststrom I_{L} eine bestimmte Schwelle überschreitet, die beispielsweise im Bereich zwischen dem 2-bis 3-fachen des Nennstroms, vorzugsweise dem 2,0- bis 2,3-fachen des Nennstroms beträgt. Wenn dies der Fall ist, wird ein entsprechendes Überstromindikatorsignal V an eine zweite Strombegrenzungssignalerzeugungseinheit 252 der Überstromeinheit 25 ausgegeben, die dann ein zweites Strombegrenzungssignal B₂ erzeugt und über die Potentialtrennungseinheit 24 an die Steuereinheit 12 ausgibt. Mittels dieses zweiten Strombegrenzungssignals B₂ wird der Laststrom auf einen Überlaststrom begrenzt, der grundsätzlich größer ist als der maximale Dauerlaststrom, aber zu keinem Zeitpunkt überschritten werden darf, da dadurch Bauteile beschädigt werden könnten. Die Steuereinheit 12 wird also durch das zweite Strombegrenzungssignal B₂ angewiesen, den Laststrom nicht über einen maximalen Laststrom zu erhöhen, d.h., der Laststrom würde so auf diesen maximalen Laststrom begrenzt, der je nach Anwendung beispielsweise dem 2- bis 3-fachen des Nennstromes entspricht. Damit wird auch ein effektiver Kurzschlussschutz gewährleistet.

In einer alternativen Ausgestaltung kann auch vorgesehen sein, dass mittels des zweiten Strombegrenzungssignals B₂ der Laststrom indirekt nicht nur auf den Überlaststrom begrenzt wird, sondern dass bei Erreichen der Schwelle S₂ der Laststrom sofort auf einen deutlich niedrigeren Wert, beispielsweise den maximalen Dauerlaststrom oder gar den Nennstrom heruntergeschaltet wird.

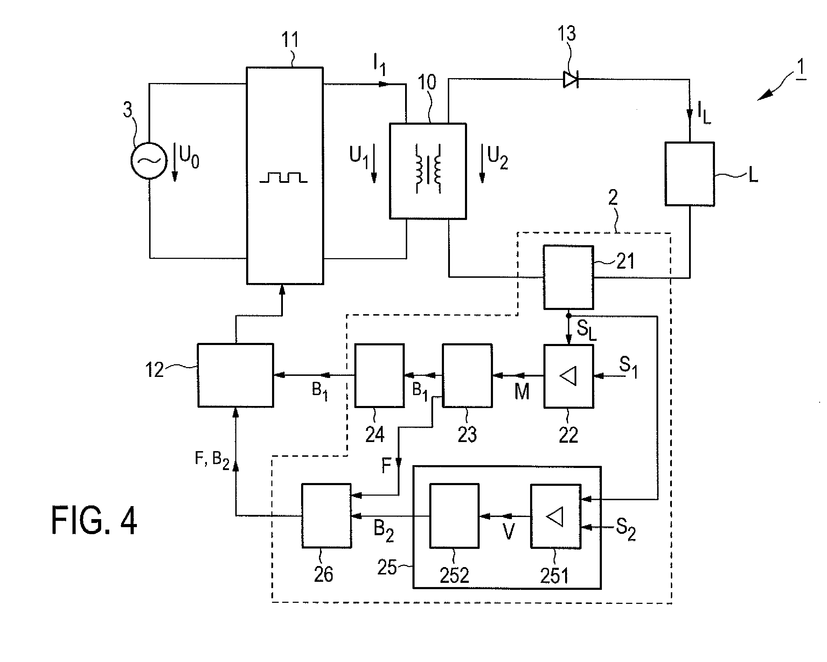

Fig. 4 zeigt eine weitere Ausgestaltung der erfindungsgemäßen Schaltnetzteilvorrichtung, bei der - anders als bei der in Fig. 3 gezeigten Ausgestaltung - das Frequenzsteuersignal F und das zweite Strombegrenzungssignal B₂ über eine gesonderte Potentialtrennungseinheit 26 (z.B. einen gesonderten Optokoppler) an die Steuereinheit 12 übertragen werden und nur das erste Strombegrenzungssignal B₁ über die Potentialtrennungseinheit 24 an die Steuereinheit 12 übertragen wird. Solche zwei Potentialtrennungseinheiten 24, 26 sind üblicherweise in Schaltnetzteilvorrichtungen bereits vorhanden, um einerseits Regelungssignale zu übertragen bzw. bei Überspannung mittels einer Pulsbreitensteuerung (z.B. bei Ausfall der Regelung) das Schaltnetzteil abzuschalten. Erfindungsgemäß wird ausgenutzt, dass die Potentialtrennungseinheit 26 - zusätzlich zu Übertragung des zweiten Strombegrenzungssignals B₂ auch zur Übertragung des Frequenzsteuersignals F genutzt wird, solange die Regelung über die Potentialtrennungseinheit 24 intakt ist. Dadurch wird der Einsatz einer dritten Potentialtrennungseinheit erfindungsgemäß für diese Funktion vermieden.

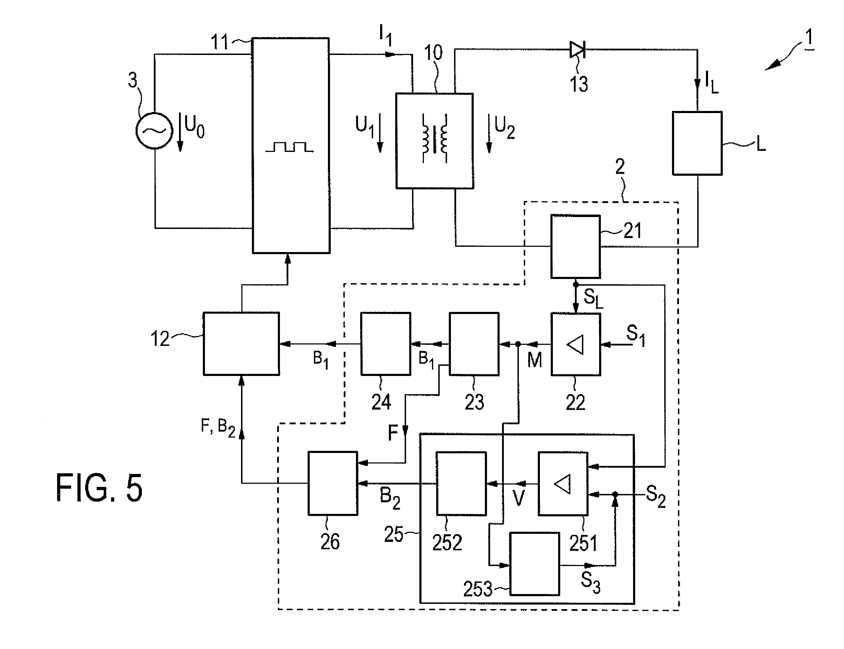

Noch eine weitere Ausgestaltung der erfindungsgemäßen Schaltnetzteilvorrichtung ist in Fig. 5 gezeigt. Dort weist die Überstromschutzeinheit 25 zusätzlich eine Schwellwerterhöhungseinheit 253 auf, der das Meldesignal M zugeführt wird. Wenn dieses Meldesignal M indiziert, dass die erste Schwelle S₁ überschritten ist, wird mittels der Schwellwerterhöhungseinheit 253 ein Schwellwerterhöhungssignal S₃ erzeugt, das der zweiten Schwellwerteinheit 251 an dessen Referenzeingang zugeführt wird, so dass dadurch die zweite Schwelle S₂ erhöht wird. Dadurch prüft die zweite Schwellwerteinheit also, ob die Lastmessgröße S_{L} diese erhöhte Schwelle überschreitet und erzeugt erst dann das Indikatorsignal V, so dass erst bei Überschreiten dieser erhöhten zweiten Schwelle die Begrenzung auf den Überlaststrom eintritt. Die Schwellwerterhöhungseinheit 253 ist dabei aber so ausgestaltet, dass das Schwellwerterhöhungssignal S₃ nur für kurze Zeit, insbesondere für einen Zeitraum von weniger als 1 Sekunde (beispielsweise für 0,1 Sekunden) erzeugt wird, so dass nur für diesen kurzen Zeitraum letztlich ein Überschreiten des Überlaststroms möglich ist. Ferner ist die Schwellwerterhöhungseinheit 2,5 bevorzugt so ausgestaltet, dass die zweite Schwelle einen Wert aufweist, mit dem geprüft wird, ob der Laststrom im Bereich zwischen 200% und 400%, vorzugsweise im Bereich zwischen 250% und 350% des Nennstroms liegt. Mit dieser Ausgestaltung wird also kurzzeitig eine starke Erhöhung des Laststroms und damit der übertragenen Leistung auf das Mehrfache des Nennwerts möglich, was für bestimmte Anwendungen (z.B. Auslösung einer Sicherung in mechanischen Sicherungsautomaten) benötigt wird. Die erfindungsgemäße Lösung kommt dabei ohne manuell zu betätigende Umschalter zum Umgehen der (in Fig. 3 gezeigten) Überlaststrombegrenzung aus.

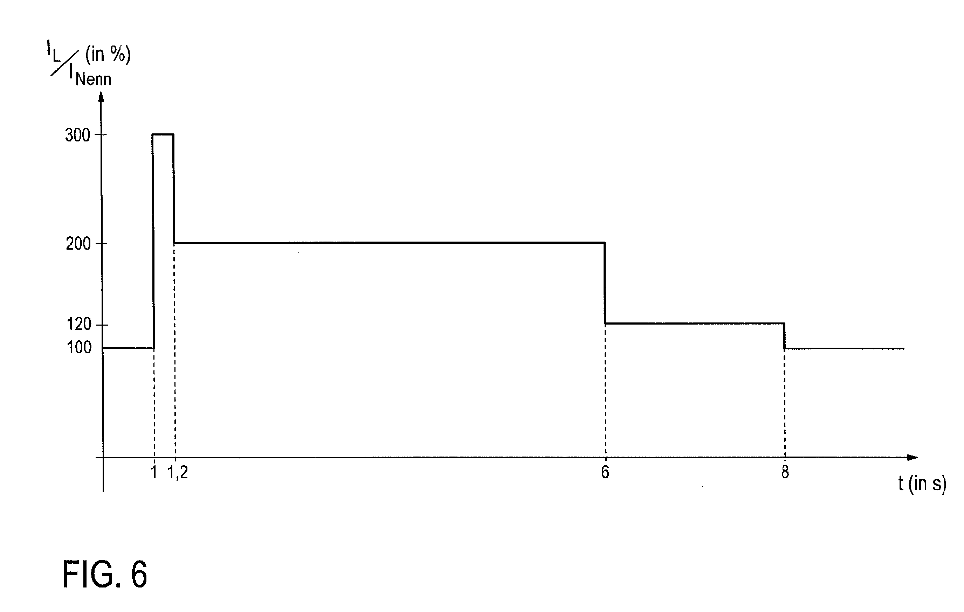

Fig. 6 zeigt in einem Diagramm den beispielhaften Verlauf des Laststromes I_{L} in Relation zu dem Nennstrom I_{Nenn}, der mit der in Fig. 5 gezeigten Ausgestaltung erreichbar ist. In dem gezeigten Beispiel tritt nach 1 Sekunde der Überlastfall ein. Mittels des Frequenzsteuersignals F wird sofort eine Erhöhung der Schaltfrequenz bewirkt. Da die zweite Schwelle S₂ mittels des Stromerhöhungssignals S₃ angehoben wird, kann in diesem Beispiel der Laststrom I_{L} bis auf 300% des Nennstroms ansteigen (bis dahin ist die zweite Schwelle S₂ erhöht in diesem Beispiel). Auch die Strombegrenzung mittels des ersten Strombegrenzungssignals B₁ tritt in diesem Moment noch nicht ein.

Nach 0,2 Sekunden wird die zweite Schwelle S₂ nicht mehr erhöht, so dass der Laststrom auf den Überlaststrom begrenzt wird, der in diesem Beispiel 200% des Nennstroms beträgt.

5 Sekunden nach Beginn des Überlastfalls tritt die Begrenzung auf den maximalen Dauerlaststrom, der hier bei 120% des Nennstroms liegt, ein, da die Verzögerungszeit der Verzögerungseinheit 23 in diesem Beispiel auf 5 Sekunden eingestellt ist. Nach weiteren 2 Sekunden ist in diesem Beispiel der Überlastfall beendet, und der Laststrom wird wieder auf den Nennstrom reduziert.

Der Überlastfall wird grundsätzlich durch den Anwender des Netzteiles hervorgerufen, z.B. durch Zuschalten von Motoren, bei Kurzschluss usw. Beendet wird dieser Fall durch den Anwender, wenn kein erhöhter Strombedarf mehr besteht. Wenn längere Zeit ein Strom über der Schwelle von z.B. 120% des Nennstromes entnommen wird, bricht die Ausgangsspannung des Netzteiles zusammen. Dadurch wird die übertragbare Leistung begrenzt und das Netzteil sowie die Schaltung des Anwenders geschützt.

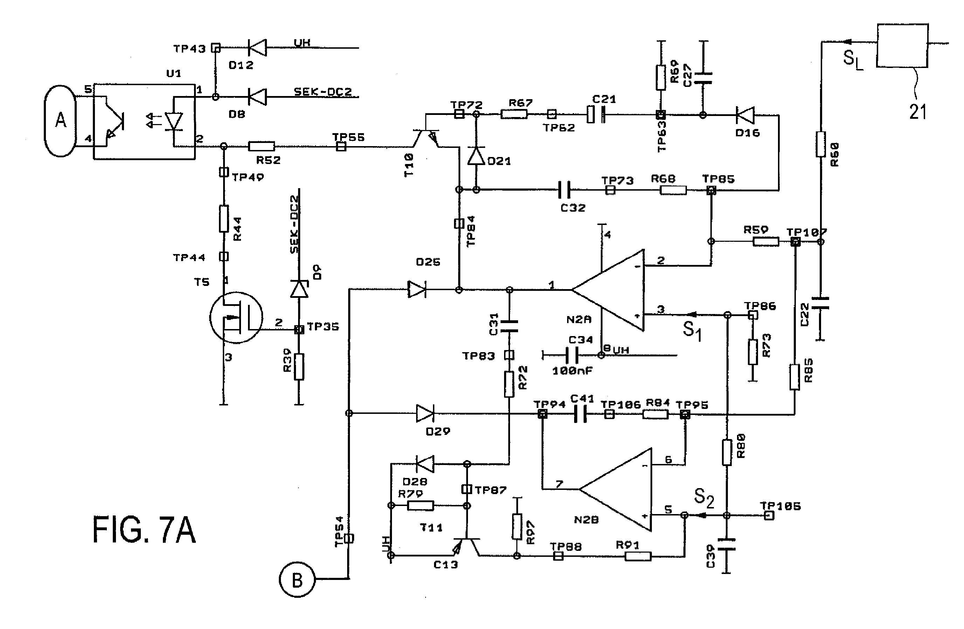

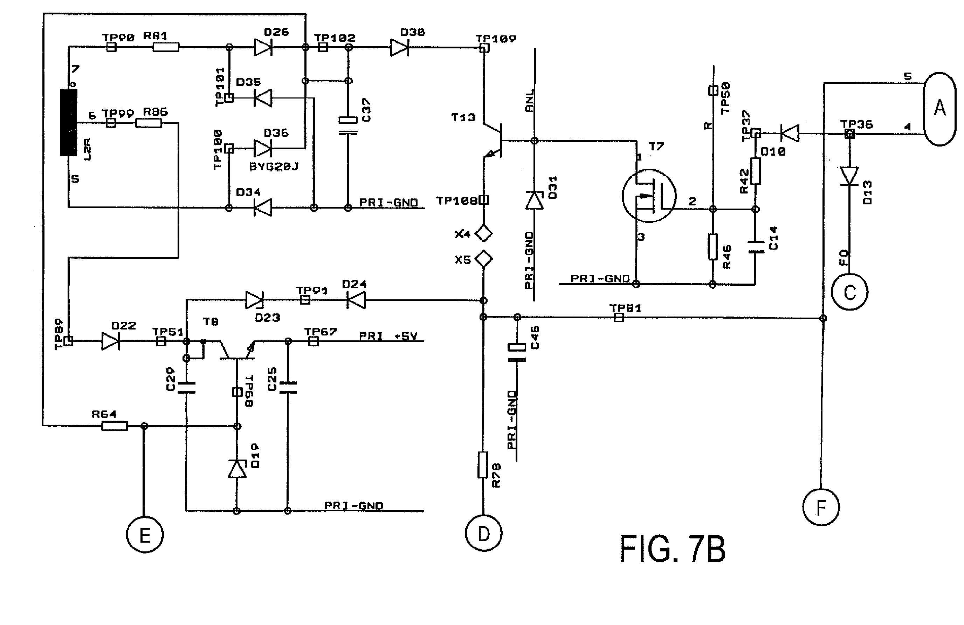

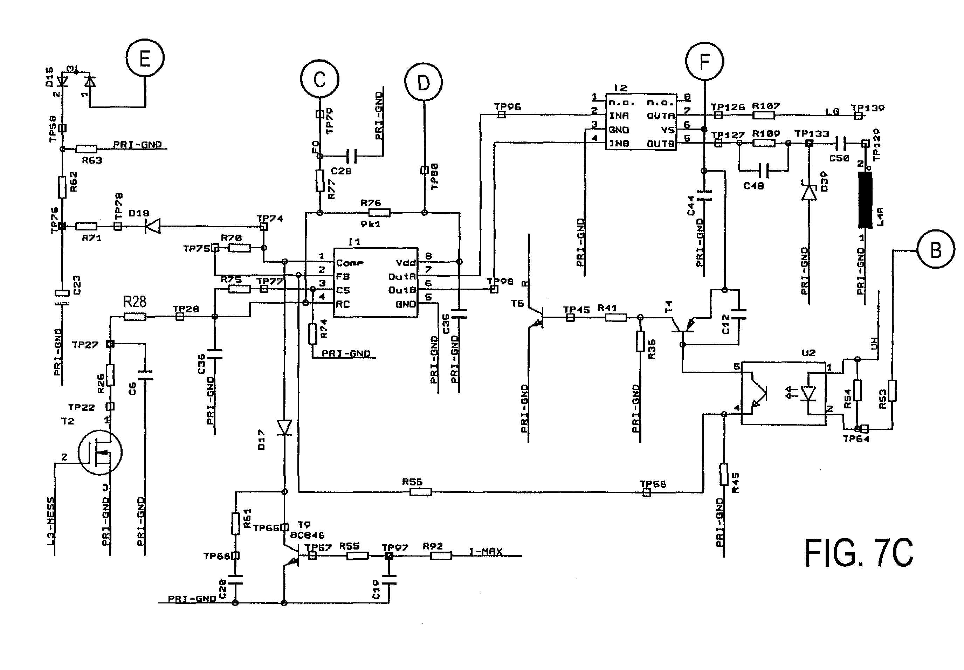

In Fig. 7 ist beispielhaft eine konkrete Ausgestaltung der in Fig. 5 gezeigten Ausführungsform der erfindungsgemäßen Schaltungsanordnung 2 in Analogschaltungstechnik gezeigt. Die Übergänge zwischen den Figuren 7A bis 7C sind durch Buchstaben A bis F gekennzeichnet. Es sei an dieser Stelle angemerkt, dass die konkrete Ausgestaltung und die Dimensionierung der gezeigten Elemente natürlich jeweils von der gewünschten Anwendung abhängen. Gleichermaßen können einzelne oder alle Baugruppen natürlich auch in Digitalschaltungstechnik entsprechend realisiert werden.

In Fig. 7A sind zunächst die Komparatoren N2A (Pin 2) und N2B (Pin 6) erkennbar, die im wesentlichen die erste und zweite Schwellwerteinheit 22, 251 bilden. Diese bekommen über den Widerstand R60 von der Lastmesseinheit 21 die dem Laststrom proportional gemessene Lastmessgröße S_{L}, insbesondere hier eine dem Laststrom direkt proportionale Lastmessspannung. Die Schwellen S₁, S₂, hier Referenzspannungen, liegen an Pin 3 des Komparators N2A bzw. Pin 5 des Komparators N2B an und sind beispielsweise unterschiedlich, um verschiedene Schaltschwellen zu erreichen. Bei einem Laststrom von beispielsweise 120% des Nennstroms wird N2A aktiv. Die Spannung am Ausgang Pin 1 beginnt zu sinken. Der aufgeladene Kondensator C21 verursacht jedoch über der Diode D16 eine negative Spannung an Pin 2, solange er nicht entladen ist. Der Komparator N2A sperrt sich also über den Kondensator C21 selbst, bis der Kondensator C21 ausreichend entladen ist. Dies bedeutet, dass die Spannung am Ausgang Pin 1 nur langsam absinkt, obwohl ein erhöhter Laststrom gemessen wird. Die Wirkung des Komparators N2A auf den Optokoppler U2 (Fig. 7C) tritt also nach einigen Sekunden verzögert ein. Nach der Verzögerung wird die Begrenzung des Ausgangsstromes auf beispielsweise den 1,2-fachen Nennwert gesetzt und bleibt bis zur Entfernung der Überlast bestehen.

Sobald der Komparator N2A Überlast erkannt hat, wird der Optokoppler U1 angesteuert. In dieser Zeit ist T10 aktiv, solange der Kondensator C21 nicht entladen ist. Der Entladestrom des Kondensators C21 fließt also auch über die Basis von T10, begrenzt durch den Widerstand R67. T3 wird sodann leitend. Gleich zu Beginn der Überlast wird also der Optokoppler U1 aktiv, genauer gesagt die Primärseite des Optokopplers (meist ein dort verwendeter Transistor) wird leitend. Die Spannung am Ausgangspin 5 des Optokopplers U1 (primärseitige Hilfsspannung) wird damit über die Diode D13 und den Widerstand R77 an das IC 11 angelegt. Dadurch wird die Frequenz eines im Ansteuer-IC I1 vorgesehenen Oszillators erhöht (schnellere Aufladung des Kondensators C36 (Fig. 7C)). Somit kann letztlich der Wandlertransformator eine höhere Leistung übertragen bei gleicher Transformatorgröße.

Ist der Kondensator C21 entladen, sinkt auch die Ausgangsspannung an Pin 1 des Komparators N2A soweit ab, dass der Optokoppler U2 angesteuert wird und damit die Strombegrenzung auf 120% des Nennstroms einsetzt.

Sobald der Komparator N2A Überlast erkannt hat, wird für kurze Zeit (gewählt z.B. 0,2 Sekunden) die Schwellwerterhöhungseinheit 253 aktiv. Der Kondensator C31 am Ausgang des Komparators N2A steuert den Transistor T11 für 0,2 Sekunden auf, und die Hilfsspannung der Sekundärseite wird über den Widerstand R91 an den Referenzeingang des Komparators N2B (Pin 5) gelegt. Durch die kurzzeitig höhere Referenzspannung spricht somit der Komparator N2B für 0,2 Sekunden erst bei einem höheren Strom an, also beispielsweise bei einer Überlast von 300% des Nennwertes. Anschließend begrenzt der Komparator N2B, wenn also wieder die normale Referenzspannung S₂ an Pin 5 anliegt, den Überstrom wieder auf 200% des Nennstroms.

Sinkt der Laststrom wieder unter 120% des Nennstroms (normaler Betrieb), steigt auch die Spannung an Pin 1 des Komparators N2A wieder an. Über R69 wird der Kondensator C21 langsam wieder aufgeladen und steht erst nach vollständiger Aufladung wieder für eine volle neue kurzzeitige Leistungserhöhung zur Verfügung. Diese Zeit dient als Schutz vor einer ständigen schnellen Wiederholung von Überstromzyklen.

Die Funktion des Überstromschutzes wird erst aktiv, wenn ein Überlaststrom überschritten wird. Bei intakter Spannungsregelung liegt am Optokoppler U2 Pin 4 eine Regelspannung entsprechend der Regelschwelle des Regeleingangs des Ansteuer-ICs I1 an. Dadurch wird der Transistor T6 (Fig. 7C) leitend. Das Gate des Transistor T7 (Fig. 7B) kann nicht angesteuert werden. Damit wird erkannt, dass die Spannungs- / Stromregeleinrichtung bestimmungsgemäß arbeitet. Das Schaltnetzteil wird nicht durch den Transistor T7 über den Transistor T13 (Fig. 7B) abgeschaltet, da die Spannungsversorgung des Ansteuer-ICs 11 nicht über einem Regelfehler in der Ausgangsspannungsregelung abgeschaltet wird. Somit wird eine klare Trennung der Funktionen der erhöhten Leistungsübertragung und des Überspannungsschutzes erreicht.

Übersteigt die Ausgangsspannung jedoch einen vorgegebenen Wert, tritt der Überspannungsschutz in Aktion. Die Kathode der Zenerdiode D9 (Fig. 7A) liegt am positiven Potential der Ausgangsspannung. Über die Zenerdiode D9 steigt im Fehlerfall die Spannung am Gate des Transistors T5. Der Transistor T5 wird leitend und es fließt ein Strom durch den Optokoppler U1. Die Spannung an Pin 5 am Ausgang des Optokopplers U1 wird über die Diode D10 und den Widerstand R42 an das Gate des Transistors T7 gelegt. Da die Regelspannung an Pin 4 des Optokopplers U2 ausgefallen ist, wird der Transistor T6 nicht mehr leitend. Die Spannung am Gate des Transistors T7 steigt an, so dass der Transistor T7 leitend wird. Die Spannung an der Basis des Transistors T13 (Fig. 7B) und somit auch am Emitter des Transistors T13 sinkt so weit, bis die Hilfsspannung zum Betreiben des Ansteuer-ICs I1 zu niedrig wird und das Schaltnetzteil abschaltet.

Der Transistor T7 wird nur dann aktiv, wenn die Regelspannung zur Spannungsregelung ausgefallen ist. Erkannt wird diese Situation durch den Transistor T6.

Damit werden die Funktionen Frequenzsteuerung und Überspannungsschutz über nur einen einzigen Optokoppler übertragen und können durch die vorgeschlagene Schaltungsanordnung klar getrennt werden. Dies führt zu einer vorteilhaften Einsparung an Kosten und Raumbedarf. Ferner kann nach Ausfall der Regelstrecke ein beliebiges zusätzliches Signal von der Sekundärseite auf die Primärseite des Netzteils übertragen werden, das bei funktionsfähiger Regelung unterdrückt wird.

Mit der erfindungsgemäßen Lösung, zumindest der in den Figuren 5 und 7 gezeigten Ausgestaltung, kann für einen kurzen Zeitraum, beispielsweise 0,2 Sekunden, das Mehrfache des Nennstroms erreicht werden. Auf der Lastseite können mechanische Sicherungsautomaten zur Absicherung einzelner Stromkreise eingesetzt werden. Diese brauchen für einige Millisekunden einen mehrfachen Strom des Nennwertes der Sicherung zum Auslösen. Diese Strom kann die erfindungsgemäße Schaltungsanordnung liefern, ohne dass die Ausgangsspannung zusammenbricht. Teure elektronische Sicherungen auf der Lastseite können somit ersetzt werden.

Mit der erfindungsgemäßen Lösung kann ferner für einen etwas längeren Zeitraum, beispielsweise einige Sekunden, ein Laststrom bis zum maximal einem Überlaststrom, beispielsweise 200% des Nennstroms, bereitgestellt werden. Beim Zuschalten von Verbrauchern, die kurzzeitig einen hohen Anlaufstrom fordern, kann die erfindungsgemäße Schaltnetzteilvorrichtung diesen Anlaufstrom liefern. Dies ist z.B. bei anlaufenden Motoren, magnetischen Stelleinrichtungen (Linearmotoren), Glühlampen oder beim Zuschalten von größeren Kondensatoren (Ladestrom) erforderlich. Die größere Dimensionierung des Transformators kann somit erfindungsgemäß entfallen, was Kosten und Raum einspart.

## Patentansprüche

1. Schaltungsanordnung zur Ansteuerung eines Schaltnetzteils, um eine kurzzeitige Erhöhung der Leistungsübertragung des Schaltnetzteils zu bewirken, wobei das Schaltnetzteil einen Transformator zur Übertragung elektrischer Leistung von einer Primärseite auf eine Sekundärseite, eine Schalteinheit zum Schalten eines Ansteuerstroms zur Ansteuerung des Transformators entsprechend einer Schaltfrequenz und eine Steuereinheit zur Steuerung der Schaltfrequenz aufweist, wobei die Schaltungsanordnung aufweist:
- eine Lastmesseinheit zur Messung einer zu einem durch eine Last auf der Sekundärseite fließenden Laststrom proportionalen Lastmessgröße,
- einer Schwellwerteinheit zur Prüfung, ob die gemessene Lastmessgröße einen ersten Schwellwert überschreitet,
- einer Steuersignalerzeugungseinheit zur Erzeugung, wenn die gemessene Lastmessgröße den ersten Schwellwert überschreitet, eines Frequenzsteuersignals zum Bewirken einer kurzzeitigen Erhöhung der Schaltfrequenz des Ansteuerstroms und zur Erzeugung, wenn die gemessene Lastmessgröße den ersten Schwellwert überschreitet, eines ersten Strombegrenzungssignals zum Bewirken einer Begrenzung des Laststroms auf einen maximalen Dauerlaststrom und zur Ausgabe des Frequenzsteuersignals und des ersten Strombegrenzungssignals an die Steuereinheit.

2. Schaltungsanordnung nach Anspruch 1,
**dadurch gekennzeichnet, dass** die Steuersignalerzeugungseinheit eine Verzögerungseinheit zur Zeitverzögerung der Ausgabe des ersten Strombegrenzungssignals an die Steuereinheit aufweist.

3. Schaltungsanordnung nach Anspruch 2,
**dadurch gekennzeichnet, dass** die Verzögerungszeit der Verzögerungseinheit im Bereich zwischen 1 und 20 Sekunden liegt, vorzugsweise im Bereich zwischen 5 und 10 Sekunden.

4. Schaltungsanordnung nach Anspruch 2 oder 3,
**dadurch gekennzeichnet, dass** die Verzögerungszeit abhängig vom Laststrom ist und umso kleiner ist, je größer die kurzzeitig erhöhte Leistung ist.

5. Schaltungsanordnung nach einem der Ansprüche 2 bis 4,
**dadurch gekennzeichnet, dass** die Verzögerungseinheit eine Kapazität aufweist, die, wenn die gemessene Lastmessgröße den ersten Schwellwert überschreitet, entladen wird, wobei deren Entladezeit die Verzögerungszeit bestimmt und deren Entladestrom die Erzeugung des Frequenzsteuersignals bewirkt.

6. Schaltungsanordnung nach Anspruch 5,
**dadurch gekennzeichnet, dass** die Verzögerungseinheit so ausgestaltet ist, dass die Kapazität wieder aufgeladen wird, wenn die gemessene Lastmessgröße den ersten Schwellwert wieder unterschreitet.

7. Schaltungsanordnung nach einem der vorstehenden Ansprüche,
**dadurch gekennzeichnet, dass** die Lastmesseinheit einen Messwiderstand aufweist zur Messung einer zum Laststrom direkt proportionalen Messspannung als Lastmessgröße.

8. Schaltungsanordnung nach einem der vorstehenden Ansprüche,
**dadurch gekennzeichnet, dass** die Schwellwerteinheit ausgestaltet zur Prüfung, ob der Laststrom dem m-fachen des Nennstroms des Transformators beträgt, wobei m im Bereich zwischen 1,0 und 2,2, vorzugsweise im Bereich zwischen 1,2 und 1,5, liegt.

9. Schaltungsanordnung nach einem der vorstehenden Ansprüche,
**gekennzeichnet durch** eine Überstromschutzeinheit zur Prüfung, ob die gemessene Lastmessgröße einen zweiten Schwellwert überschreitet, und, wenn die gemessene Lastmessgröße den zweiten Schwellwert überschreitet, zur Erzeugung und Ausgabe eines zweiten Strombegrenzungssignals zur Begrenzung des Laststroms auf einen Überlaststrom, der größer als der maximale Dauerlaststrom ist.

10. Schaltungsanordnung nach Anspruch 9,
**dadurch gekennzeichnet, dass** die Überstromschutzeinheit ausgestaltet ist zur Prüfung, ob der Laststrom dem n-fachen des Nennstroms des Transformators beträgt, wobei n im Bereich zwischen 2,0 und 3,0, vorzugsweise im Bereich zwischen 2,0 und 2,3, liegt.

11. Schaltungsanordnung nach Anspruch 9 oder 10,
**dadurch gekennzeichnet, dass** die Überstromschutzeinheit ferner zur kurzzeitigen Anhebung des zweiten Schwellwertes ausgestaltet ist, so dass die Überstromschutzeinheit prüft, ob der Laststrom dem p-fachen des Nennstroms des Transformators beträgt, wobei p im Bereich zwischen 2,0 und 4,0, vorzugsweise im Bereich zwischen 2,5 und 3,5, liegt, und nur in diesem Fall das zweite Strombegrenzungssignal erzeugt und ausgibt.

12. Schaltungsanordnung nach einem der vorstehenden Ansprüche,
**gekennzeichnet durch** einen gemeinsamen Optokoppler zur Ausgabe des Frequenzsteuersignals und eines Überspannungssignals zur Anzeige einer fehlerhaften oder ausgefallenen Spannungsregelung an die Steuereinheit.

13. Schaltnetzteilvorrichtung mit :
- einem Schaltnetzteil mit einem Transformator zur Übertragung elektrischer Leistung von einer Primärseite auf eine Sekundärseite, einer Schalteinheit zum Schalten eines Ansteuerstroms zur Ansteuerung des Transformators entsprechend einer Schaltfrequenz, und einer Steuereinheit zur Steuerung der Schaltfrequenz, und
- einer Schaltungsanordnung zur Ansteuerung des Schaltnetzteils, um eine kurzzeitige Erhöhung der Leistungsübertragung des Schaltnetzteils zu bewirken, nach einem der vorstehenden Ansprüche.

14. Verfahren zur Ansteuerung eines Schaltnetzteils, um eine kurzzeitige Erhöhung der Leistungsübertragung des Schaltnetzteils zu bewirken, wobei das Schaltnetzteil einen Transformator zur Übertragung elektrischer Leistung von einer Primärseite auf eine Sekundärseite, eine Schalteinheit zum Schalten eines Ansteuerstroms zur Ansteuerung des Transformators entsprechend einer Schaltfrequenz und eine Steuereinheit zur Steuerung der Schaltfrequenz aufweist, wobei das Verfahren die folgenden Schritte aufweist:
- Messung einer zu einem durch eine Last auf der Sekundärseite fließenden Laststrom proportionalen Lastmessgröße,
- Prüfung, ob die gemessene Lastmessgröße einen ersten Schwellwert überschreitet,
- Erzeugung, wenn die gemessene Lastmessgröße den ersten Schwellwert überschreitet, eines Frequenzsteuersignals zum Bewirken einer kurzzeitigen Erhöhung der Schaltfrequenz des Ansteuerstroms,
- Erzeugung, wenn die gemessene Lastmessgröße den ersten Schwellwert überschreitet, eines ersten Strombegrenzungssignals zum Bewirken einer Begrenzung des Laststroms auf einen maximalen Dauerlaststrom und
- Ausgabe des Frequenzsteuersignals und des ersten Strombegrenzungssignals an die Steuereinheit.
